# EUROPEAN PATENT SPECIFICATION

(11) **EP 4 354 591 B1**
(45) Date of publication and mention of the grant of the patent: **24.09.2025**
(21) Application number: 22918455.1
(22) Date of filing: 27.12.2022
(51) Int. Cl.: H01M 10/48, H01M 50/204, H01M 50/244, A62C 3/16, A62C 31/02, H02J 15/00, G01K 11/32, A62C 37/36, A62C 37/44, G01K 1/02, G01K 1/14, G01K 3/14, G08B 17/00

(54) **ENERGY STORAGE SYSTEM AND FIRE PROTECTION METHOD FOR ENERGY STORAGE SYSTEM**
ENERGIESPEICHERSYSTEM UND BRANDSCHUTZVERFAHREN FÜR EIN ENERGIESPEICHERSYSTEM
SYSTÈME DE STOCKAGE D'ÉNERGIE ET PROCÉDÉ DE PROTECTION INCENDIE POUR UN SYSTÈME DE STOCKAGE D'ÉNERGIE

(30) Priority: 04.01.2022 CN 202210003582
(43) Date of publication of application: 17.04.2024
(73) Proprietor: Contemporary Amperex Technology (Hong Kong) Limited, Central, Central And Western District (HK)
(72) Inventor: BAN, Chaofeng, Ningde City, Fujian 352100 (CN); HUANG, Fangyu, Ningde City, Fujian 352100 (CN); YAN, Haonan, Ningde City, Fujian 352100 (CN); WANG, Zhihui, Ningde City, Fujian 352100 (CN)
(74) Representative: Ziebig Hengelhaupt Intellectual Property Attorneys Patentanwaltskanzlei PartGmbB
(86) International application number: PCT/CN2022/142519
(87) International publication number: WO 2023/131014

(56) References cited:
- WO-A1-2021/112422
- CN-A- 109 308 784
- CN-A- 109 883 569
- CN-A- 109 883 569
- CN-A- 111 494 841
- CN-U- 207 323 916
- CN-U- 207 379 631
- CN-U- 208 188 305
- CN-U- 210 521 585
- CN-U- 215 195 144
- CN-U- 217 086 826
- JP-A- 2012 249 803
- JP-A- H09 276 426

## Description

### TECHNICAL FIELD

This invention relates to an energy storage system and a fire protection method using for the energy storage system.

### BACKGROUND

With the depletion of natural resources and the increasing damage to the environment, people are increasingly interested in systems capable of storing energy and efficiently utilizing the stored energy in various fields. Also, people are increasingly interested in new renewable energy that causes no or little pollution (for example, a tiny amount of pollution) in a process of generating electricity. Battery cells may be combined to form a system that utilizes new renewable energy, a battery system, or an existing power system.

Safety is a critical problem in applying the battery cells in the field of energy storage. Therefore, how to enhance the safety of the battery cells applied in the field of energy storage is an urgent technical problem in the field of energy storage.

Relevant prior art documents are: JP 2012 249803 A, CN 111 494 841 A, CN 109 883 569A, WO 2021/112422 A1.

### SUMMARY

According the invention, an energy storage system according to claim 1 is provided, and a fire protection method using the energy storage system according to claim 9.

With the above structure, first, the fire prevention assembly and the storage assembly are disposed correspondingly to facilitate accurate detection of a fire point and accurate positioning of the fire start point. Second, the thermometric optical fiber makes the storage system more sensitively responsive to the fire, enables the fire protection measures to be taken quickly, and makes the fire be dealt with in time. Third, with the thermometric optical fiber disposed in a curved manner, a larger part of the thermostatic optical fiber is caused to be oriented toward the storage assembly, thereby accelerating the temperature measurement progress and the response speed.

In some optional embodiments, a plurality of fixing pieces are disposed on the side of the plate, the side being oriented toward the storage assembly. The plurality of fixing pieces are configured to provide a support for the curved extending of the thermometric optical fiber on the plate.

The above structure enables the thermometric fiber to be fixed onto the plate, and makes it convenient to extend the thermometric fiber in a curved manner.

In some optional embodiments, a plurality of thermometric optical fibers are disposed on the plate.

The above structure improves the measurement precision of the thermometric optical fiber, and reduces measurement omissions.

According to the invention, the energy storage system further includes a fire protection assembly. The fire protection assembly includes a sprinkler head. The sprinkler head is disposed corresponding to the storage assembly and configured to spray a fire-extinguishing liquid to the battery cell when the temperature of the battery cell reaches the threshold.

With the above structure, fire can be extinguished for the corresponding battery cell pertinently based on a precise signal obtained by the fire prevention assembly. In this way, the fire is precluded from growing from the fire start point, and the spread of the fire is prevented effectively.

According to the invention, the fire protection assembly further includes a fire protection tank. The fire protection tank is configured to accommodate the fire-extinguishing liquid and receive the storage assembly that contains an abnormal-temperature battery cell, so as to submerge the battery cell in the fire-extinguishing liquid.

The above structure can improve the fire protection effect and ensure the safety of the energy storage system.

The fire protection tank includes a tank body and a moving assembly. The tank body is configured to accommodate the fire-extinguishing liquid. The moving assembly is connected to the tank body and movable along an extension direction of the tank body. The moving assembly is configured to move the storage assembly containing the abnormal-temperature battery cell into the tank body and submerge the storage assembly in the fire-extinguishing liquid.

In some optional embodiments, a temperature sensor is disposed in the tank body and configured to detect a temperature of the fire-extinguishing liquid.

The above structure enables automation of the submerging and fire protection operations, reduces the duration in which the firefighting staff touches the battery cell on fire, and improves the safety of the energy storage system.

In some optional embodiments, the energy storage system further includes a stacking apparatus. The stacking apparatus is movable relative to the energy storage assembly and configured to pick up the energy storage assembly and place the energy storage assembly into the moving assembly.

The above structure enables full automation of the fire protection process, reduces the frequent entry of the staff into the energy storage system in a case of fire, ensures the personal safety of the staff, and improves the safety of the energy storage system.

In some optional embodiments, the energy storage system further includes a control assembly. The control assembly is electrically connected to the fire prevention assembly, the fire protection assembly, and stacking apparatus and configured to receive the fire signal transmitted by the fire prevention assembly, control the corresponding sprinkler head to turn on or off, control the moving assembly to move or stop, and control the stacking apparatus to pick up the corresponding energy storage assembly and place the energy storage assembly into the moving assembly.

The above structure enables automation of the fire protection function in the energy storage system, reduces the number of staff members deployed in the energy storage system, and improves the safety of the energy storage system.

In some optional embodiments, the storage assembly includes a pallet and a plurality of partition plates. The plurality of partition plates are disposed on the pallet to form a plurality of accommodation chambers. The accommodation chambers are configured to accommodate the battery cell.

With the above structure, a plurality of battery cells can be integrated in the same storage assembly, thereby facilitating the storage of a large number of battery cells in the energy storage system.

In some optional embodiments, the energy storage system further includes a shelf. A plurality of storage assemblies and a plurality of fire prevention assemblies are accommodated in the shelf. The plurality of storage assemblies are disposed corresponding to the plurality of fire prevention assemblies.

With the above structure, by disposing the shelf, the architecture of the storage assembly and the fire prevention assembly is further optimized, it is convenient to mount more storage assemblies and fire prevention assemblies per unit volume of space, and to store a large number of battery cells in the energy storage system.

The technical solution provided by the method according to claim 9 enables automation of the fire protection operations in the energy storage system.

In some optional embodiments, the fire signal is received by a control assembly. The step of performing, by the control assembly, fire protection on the battery cell in the storage assembly upon receiving the fire signal includes:
receiving a first fire signal;
controlling a sprinkler head of a fire protection assembly to spray;
receiving a second fire signal;
controlling a stacking apparatus to relocate the corresponding storage assembly to a fire protection tank of the fire protection assembly; and
controlling the fire protection tank to perform fire protection.

The first fire signal is a signal sent by the thermometric optical fiber upon detecting that the temperature inside the battery cell reaches the threshold. The second fire signal is a signal received after the spraying as an instruction for the fire protection tank to perform fire protection.

In some optional embodiments, the step of controlling the fire protection tank to perform fire protection includes:
controlling a moving assembly to submerge the storage assembly in a tank body;
receiving a third fire signal; and
controlling the moving assembly to remove the storage assembly out of the tank body.

The third fire signal is a temperature signal sent by a temperature sensor in the tank body or a received fire protection operation stoppage signal.

The above technical solution enables automation of the fire protection operations in the fire protection tank.

In contrast to the prior art, in the energy storage system in an embodiment of this application, first, the fire prevention assembly and the storage assembly are disposed correspondingly to facilitate accurate detection of a fire point and accurate positioning of the fire start point. Second, the thermometric optical fiber makes the storage system more sensitively responsive to the fire, enables the fire protection measures to be taken quickly, and makes the fire be dealt with in time. Third, with the thermometric optical fiber disposed in a curved manner, a larger part of the thermostatic optical fiber is caused to be oriented toward the storage assembly, thereby accelerating the temperature measurement progress and the response speed.

### BRIEF DESCRIPTION OF DRAWINGS

The following describes features, advantages, and technical effects of exemplary embodiments of this application with reference to accompanying drawings.
FIG. 1 is a schematic structural diagram of an energy storage system according to an embodiment of this application;
FIG. 2 is a schematic structural diagram of an energy storage system according to another embodiment of this application;
FIG. 3 is a schematic close-up view of the embodiment shown in FIG. 1;
FIG. 4 is a schematic structural diagram of a fire prevention assembly in the embodiment shown in FIG. 1;
FIG. 5 is a schematic structural diagram of a fire protection tank in the embodiment shown in FIG. 2;
FIG. 6 is a schematic structural diagram of a tank body in the embodiment shown in FIG. 2;
FIG. 7 is a schematic structural diagram of a storage assembly in the embodiment shown in FIG. 1;
FIG. 8 is a schematic flowchart of a fire protection method according to an embodiment of this application;
FIG. 9 is a schematic flowchart of a fire protection method according to another embodiment of this application; and
FIG. 10 is a schematic flowchart of a fire protection method according to still another embodiment of this application.

List of reference numerals:
1. storage assembly; 11. pallet; 12. partition plate; 13. accommodation chamber; 2. fire prevention assembly; 21. plate; 22. thermometric fiber optic; 23. fixing piece; 3. fire protection assembly; 31. sprinkler head; 32. fire protection tank; 321. tank body; 322. moving assembly; 3221. hydraulic moving lever; 3222. bench; 323. temperature sensor; 324. liquid level sensor; 325. outflow pipe; 326. inflow pipe; 4. stacking apparatus; 5. shelf; 6. control assembly; 10. battery cell.

The drawings are not necessarily drawn to scale.

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

Currently, as can be seen from the market development prospect and application trend, battery cells have been widely applied in various fields by virtue of a high energy density, a high power density, the large number of cycles, a long shelf life, and the like. For example, the battery cells are widely applied in energy storage power systems such as hydro, thermal, wind, and solar power stations. Due to inherent characteristics of the battery cells, when a plurality of battery cells are used together in a centralized manner, safety hazards occur and a chain reaction tends to occur. For example, the battery cells are prone to spontaneous combustion as an aggregate. Therefore, currently, a specialized fire protection assembly is usually mounted for an energy storage system in this field to implement energy storage and utilization of the battery cells. However, currently, a smoke and temperature sensor is typically used in an existing energy storage system. The structure of the smoke and temperature sensor is complicated. In an energy storage system in which a large number of battery cells are used, the use of the smoke and temperature sensor involves numerous complex line structures, thereby not only aggravating the early-stage construction difficulty, but also being prone to impede the fire protection operations.

The applicant of this application has noticed that, in order to solve the above problem, an attempt is made currently in this field to apply a regional detection method. Specifically, a region of the energy storage system is detected by a smoke and temperature sensor. In practice, this method not only imposes a high requirement on the hardware of the control system, but also causes a problem of a reduced detection precision.

To alleviate the fire protection defects in the existing energy storage system, the applicant hereof finds through research that a high detection precision can be achieved and the overall architecture of the energy storage system can be streamlined by optimizing the overall architecture of the energy storage system and selecting a novel thermometry, so as to facilitate the fire protection operations, and reduce the construction difficulty and the mounting cost. The technical solution hereof is universally applicable.

In view of the above considerations, in order to solve the fire protection problems in the existing energy storage system, through in-depth research, the applicant hereof has designed an energy storage system and a fire protection method for the energy storage system.

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell. The battery cell may be in various shapes such as cylindrical, flat, cuboidal or other shapes. The shape of the battery cell is not limited herein.

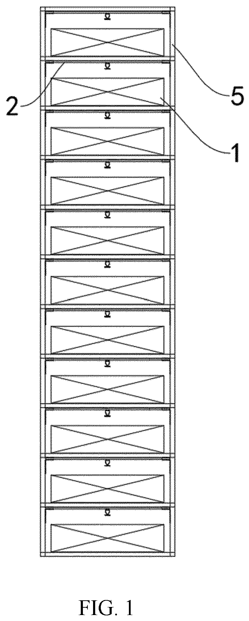

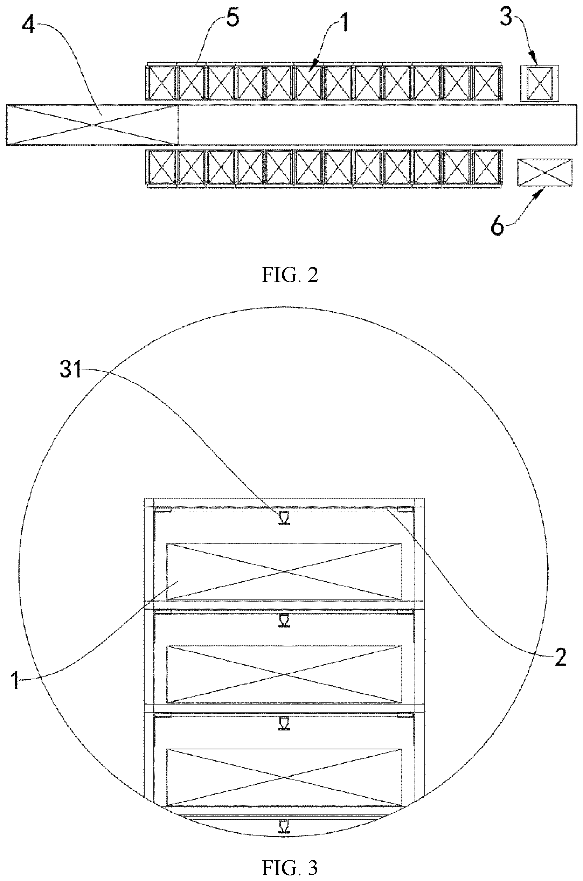

FIG. 1 is a schematic structural diagram of an energy storage system according to an embodiment of this application; FIG. 2 is a schematic structural diagram of an energy storage system according to another embodiment of this application; and FIG. 3 is a schematic close-up view of the embodiment shown in FIG. 1 According to embodiments of the invention, as shown in FIG. 1 to FIG. 3, this application discloses an energy storage system, including a storage assembly 1 and a fire prevention assembly 2. The storage assembly 1 is configured to store a battery cell 10. The fire prevention assembly 2 includes a plate 21 and a thermometric optical fiber 22 disposed on the plate 21. The plate 21 is disposed opposite to the storage assembly 1. The thermometric optical fiber 22 is configured to sense a temperature of the battery cell 10 so as to send a fire signal when the temperature of the battery cell 10 reaches a threshold. The thermometric optical fiber 22 is disposed on a side of the plate 21 and extends along a curved path, the side being oriented toward the storage assembly 1.

Referring to FIG. 2 and FIG. 3, without limitation, the fire prevention assembly 2 is disposed on a side of the storage assembly 1 in a thickness direction of the storage assembly. Specifically, the plate 21 is disposed above the storage assembly 1 in the thickness direction, and the plate 21 is disposed parallel to the storage assembly 1. The thermometric optical fiber 22 is disposed on a bottom face of the plate 21. Without limitation, the thermometric optical fiber 22 extends along a wavy path on the plate 21. Without limitation, the thermometric optical fiber 22 extends along a closed annular path on the plate 21.

First, the fire prevention assembly 2 and the storage assembly 1 are disposed correspondingly to facilitate accurate detection of a fire point and accurate positioning of the fire start point. Second, the thermometric optical fiber 22 makes the storage system more sensitively responsive to the fire, enables the fire protection measures to be taken quickly, and makes the fire be dealt with in time. Third, with the thermometric optical fiber 22 disposed in a curved manner, a larger part of the thermostatic optical fiber 22 is caused to be oriented toward the storage assembly 1, thereby accelerating the temperature measurement progress and the response speed.

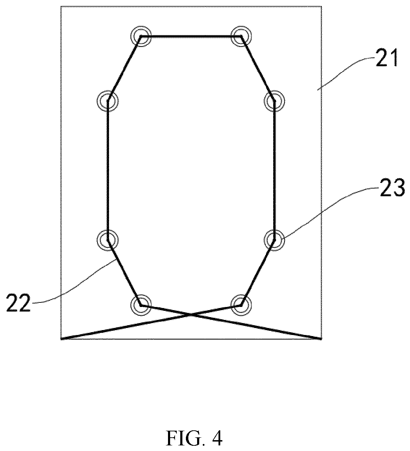

FIG. 4 is a schematic structural diagram of a fire prevention assembly 2 in the embodiment shown in FIG. 1. In some optional embodiments, optionally, as shown in FIG. 4, a plurality of fixing pieces 23 are disposed on the side of the plate 21, the side being oriented toward the storage assembly 1. The plurality of fixing pieces 23 are configured to provide a support for the curved extending of the thermometric optical fiber 22 on the plate 21.

Referring to FIG. 4, without limitation, one end of the fixing piece 23 may be fixed to the plate 21, and the other end of the fixing piece may be bent into a ring shape. The thermometric optical fiber 22 is threaded in the ring shape. Without limitation, the fixing piece 23 may be a press-fit plate connected threadedly to the plate 21. The press-fit plate can fix the thermometric optical fiber 22 onto the plate 21 when moving toward the plate 21.

The fixing piece 23 enables an extension track of the thermometric optical fiber 22 to be flexibly adjusted based on the actual operating conditions, and facilitates the curved extending of the thermometric optical fiber 22.

In some optional embodiments, optionally, a plurality of thermometric optical fibers 22 may be disposed on the plate 21.

Without limitation, two thermometric optical fibers 22 may be disposed in parallel and extend along a curved path on the plate 21. Without limitation, the plurality of thermometric optical fibers 22 extend along the same curved path on the plate 21.

The arrangement of the plurality of thermometric optical fibers 22 can improve the measurement precision of the thermometric optical fibers 22 significantly, and reduce measurement omissions caused by damage of the thermometric optical fibers 22.

FIG. 1 is a schematic structural diagram of an energy storage system according to an embodiment of this application, and FIG. 3 is a schematic close-up view of the embodiment shown in FIG. 1. In some optional embodiments, optionally, as shown in FIG. 1 and FIG. 3, the energy storage system further includes a fire protection assembly 3. The fire protection assembly 3 includes a sprinkler head 31. The sprinkler head 31 is disposed corresponding to the storage assembly 1 and configured to spray a fire-extinguishing liquid to the battery cell 10 when the temperature in the storage assembly 1 reaches the threshold.

Without limitation, the sprinkler head 31 may be disposed at a center of the plate 21. Without limitation, the fire protection assembly 3 may further include a fire protection pipeline. One end of the fire protection pipeline communicates with the sprinkler head 31, and the other end of the fire protection pipeline communicates with a fire-extinguishing liquid source. Without limitation, the fire-extinguishing liquid may be water.

With the fire protection assembly 3 disposed, fire can be extinguished for the corresponding battery cell 10 pertinently based on a precise signal obtained by the fire prevention assembly 2. In this way, the fire is precluded from growing from the fire start point, and the spread of the fire is prevented effectively.

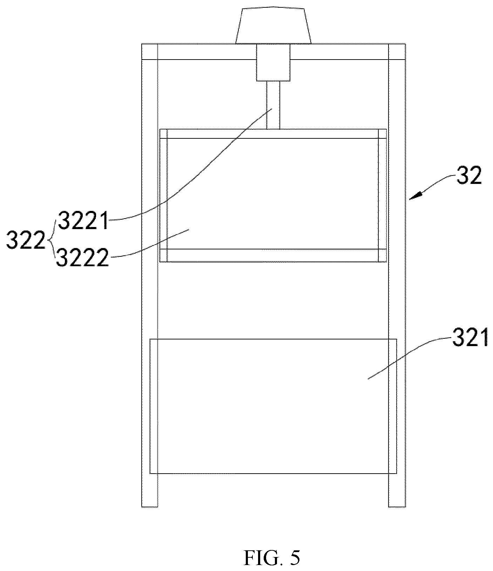

FIG. 2 is a schematic structural diagram of an energy storage system according to another embodiment of this application, and FIG. 5 is a schematic structural diagram of a fire protection tank 32 in the embodiment shown in FIG. 2. In some optional embodiments, optionally, as shown in FIG. 2 and FIG. 5, The fire protection assembly 3 further includes a fire protection tank 32. The fire protection tank 32 is configured to accommodate the fire-extinguishing liquid and receive the storage assembly 1 that contains an abnormal-temperature battery cell 10, so as to submerge the battery cell 10 in the fire-extinguishing liquid.

Without limitation, the fire-extinguishing liquid in the fire protection tank 32 may be the same as the fire-extinguishing liquid in the fire protection pipeline, and the fire protection tank 32 may communicate with the fire protection pipeline. Without limitation, the fire protection tank 32 may be a water trough capable of accommodating the storage assembly 1.

With the fire protection tank disposed, two-stage fire protection can be implemented in the energy storage system. First, a fire-extinguishing liquid is sprayed by a sprinkler head 31 at the mounting position to reduce the temperature and extinguish a visible open flame, thereby not only quickly reducing the fire hazards at the mounting position of the storage component 1, but also mitigating the danger of the storage assembly 1 during relocation. Finally, the abnormal-temperature storage assembly 1 is relocated into the fire protection tank 32 to completely extinguish the fire, thereby significantly improving the fire protection effect and ensuring the safety of the energy storage system.

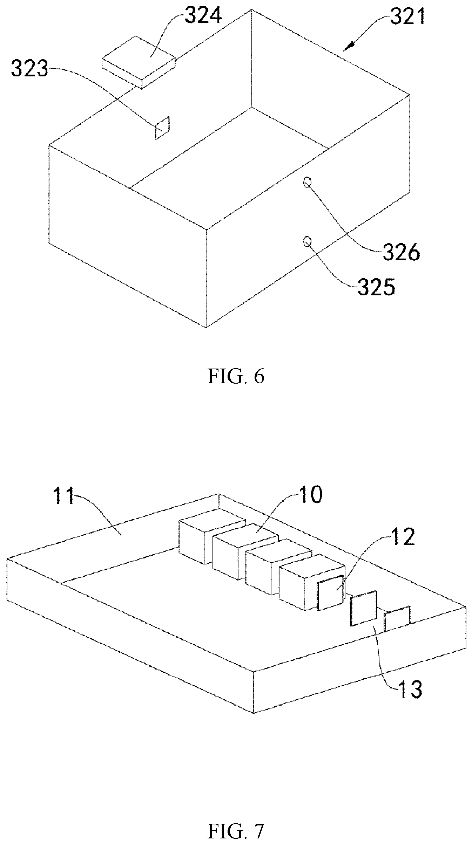

FIG. 5 is a schematic structural diagram of a fire protection tank 32 in the embodiment shown in FIG. 2, and FIG. 6 is a schematic structural diagram of a tank body 321 in the embodiment shown in FIG. 2. In some optional embodiments, optionally, as shown in FIG. 5 and FIG. 6, The fire protection tank 32 includes a tank body 321 and a moving assembly 322. The tank body 321 is configured to accommodate the fire-extinguishing liquid. The moving assembly 322 is connected to the tank body 321 and movable along an extension direction of the tank body 321. The moving assembly 322 is configured to move the storage assembly 1 containing the abnormal-temperature battery cell 10 into the tank body 321 and submerge the storage assembly in the fire-extinguishing liquid.

Referring to FIG. 5 and FIG. 6, according to the invention, the moving assembly 322 includes a hydraulic moving lever 3221 and a bench 3222. The bench 3222 is configured to accommodate the storage assembly 1 containing abnormal-temperature battery cell 10. The hydraulic moving lever 3221 is connected to the bench 3222, and can drive the bench 3222 to move into the tank body 321. Specifically, the tank body 321 is disposed below the moving assembly 322 in a vertical direction of the moving assembly. The hydraulic moving lever 3221 can drive the bench 3222 to reciprocate along the vertical direction, so that the bench 3222 moves into the tank body 321 or out of the tank body 321. Without limitation, an inflow pipe 326 and an outflow pipe 325 may be disposed on the tank body 321. The inflow pipe 326 may communicate with the fire-extinguishing liquid source. Without limitation, a liquid level sensor 324 may be disposed on the tank body 321. The liquid level sensor is configured to sense the height of the liquid level in the tank body 321. A start position is disposed on the fire protection tank 32. The start position is a start point of the reciprocating movement of the bench. The storage assembly 1 to be protected against fire is placed in the bench 3222 when the bench 3222 is in the start position. Specifically, an edge overflow detector may be disposed on the circumference of the start position. The edge overflow detector is configured to detect whether the storage assembly 1 to be protected against fire is completely placed in the bench 3222. Without limitation, the edge overflow detector may be a laser position finder. According to the invention, a beam detector is disposed at the start position. The storage assembly 1 to be protected against fire passes through the beam detector when being placed into the bench 3222.

The moving assembly 322 disposed enables automation of the submerging and fire protection operations, reduces the duration in which the firefighting staff touches the battery cell 10 on fire, and improves the safety of the energy storage system. With the inflow pipe 326 and outflow pipe 325 disposed, the inflow pipe 326 is configured to lead the fire-extinguishing liquid into the tank body 321. The outflow pipe 325 is configured to lead the fire-extinguishing liquid out of the tank body 321. The liquid level sensor 324 disposed prevents a problem that the fire-extinguishing liquid in the tank body 321 is not enough to submerge the storage assembly 1, and prevents a problem that the fire-extinguishing liquid in the tank body 321 is excessive and overflowing out of the tank body 321 in submerging the storage assembly 1. With the edge overflow detector disposed can prevent a problem that the storage assembly 1 to be protected against fire collides with the structure on the fire protection tank 32 during movement due to protruding from the bench 3222 and thereby causes secondary damage or secondary combustion, and can also make it convenient to fully submerge the storage assembly to be protected against fire in the tank body 321. The beam detector disposed facilitates wake-up of the fire protection tank 32 and restores the fire protection tank 32 from a standby state to a working state, for example, facilitates the edge overflow detector to enter the working state.

FIG. 6 is a schematic structural diagram of a tank body 321 in the embodiment shown in FIG. 2. In some optional embodiments, optionally, as shown in FIG. 6, A temperature sensor 323 is disposed in the tank body 321 and configured to detect a temperature of the fire-extinguishing liquid.

Referring to FIG. 6, without limitation, the temperature sensor 323 may be disposed on an inner wall of the tank body 321 and in contact with the fire-extinguishing liquid. Specifically, the temperature sensor 323 can transmit the temperature of the fire-extinguishing liquid in the tank body 321 to the control assembly 6.

The above structure enables automation of the submerging and fire protection operations, reduces the duration in which the firefighting staff touches the battery cell 10 on fire, and improves the safety of the energy storage system.

FIG. 2 is a schematic structural diagram of an energy storage system according to another embodiment of this application. In some optional embodiments, optionally, as shown in FIG. 2, The energy storage system further includes a stacking apparatus 4. The stacking apparatus 4 is movable relative to the energy storage assembly and configured to pick up the energy storage assembly and place the energy storage assembly into the moving assembly 322.

Without limitation, a movement channel and a safety channel may be disposed in the energy storage system. The stacking apparatus 4 can move along the movement channel and the safety channel. Specifically, the stacking apparatus 4 can avoid the safe passage in a case of fire.

The stacking apparatus 4 disposed enables full automation of the fire protection process, reduces the frequent entry of the staff into the energy storage system in a case of fire, ensures the personal safety of the staff, and improves the safety of the energy storage system. With the avoidance mechanism arranged, the obstruction effect of the stacking apparatus 4 is alleviated in a case of fire, and the firefighting staff can quit the energy storage system quickly or arrive at the fire start point quickly.

FIG. 2 is a schematic structural diagram of an energy storage system according to another embodiment of this application. In some optional embodiments, optionally, as shown in FIG. 2, the energy storage system further includes a control assembly 6. The control assembly 6 is electrically connected to the fire prevention assembly 2, the fire protection assembly 3, and stacking apparatus 4 and configured to receive the fire signal transmitted by the fire prevention assembly 2, control the corresponding sprinkler head 31 to turn on or off, control the moving assembly 322 to move or stop, and control the stacking apparatus 4 to pick up the corresponding energy storage assembly and place the energy storage assembly into the moving assembly 322.

Without limitation, the control assembly 6 may be a processing terminal, a processor, or the like. Specifically, the control assembly 6 can control the stacking apparatus 4 to avoid the safe passage.

The control assembly 6 disposed enables automation of the fire protection function in the energy storage system, reduces the number of staff members deployed in the energy storage system, and improves the safety of the energy storage system.

FIG. 7 is a schematic structural diagram of a storage assembly 1 in the embodiment shown in FIG. 1. In some optional embodiments, optionally, as shown in FIG. 7, The storage assembly 1 includes a pallet 11 and a plurality of partition plates 12. The plurality of partition plates 12 are disposed on the pallet 11 to form a plurality of accommodation chambers 13. The accommodation chambers 13 are configured to accommodate the battery cell 10.

By disposing the pallets 11 and the partition plates 12, a plurality of battery cells 10 can be integrated in the same storage assembly 1, thereby facilitating the storage of a large number of battery cells 10 in the energy storage system. In addition, the plurality of partition plates 12 can separate the pallets 11 so that each accommodation chamber 13 is relatively independent, thereby preventing the combustion of one of the battery cells from quickly igniting surrounding battery cells.

FIG. 1 is a schematic structural diagram of an energy storage system according to an embodiment of this application, and FIG. 2 is a schematic structural diagram of an energy storage system according to another embodiment of this application. In some optional embodiments, optionally, as shown in FIG. 1 and FIG. 2, The energy storage system further includes a shelf 5. A plurality of storage assemblies 1 and a plurality of fire prevention assemblies 2 are accommodated in the shelf 5. The plurality of storage assemblies 1 are disposed corresponding to the plurality of fire prevention assemblies 2.

Referring to FIG. 2, without limitation, a plurality of mounting grooves are created on the shelf 5 in arrays along a height direction and a width direction of the shelf. The energy storage assembly is mounted in the mounting grooves. The fire protection assembly 2 is mounted in the mounting groove and on the top of the shelf 5 in the height direction. Without limitation, a plurality of shelves 5 may be disposed. Specifically, two shelves 5 may be disposed opposite to each other. The stacking apparatus 4 may move between the two shelves 5 and take out the energy storage assembly from the mounting groove on the shelf 5.

By disposing the shelf 5, the architecture of the storage assembly 1 and the fire prevention assembly 2 is further optimized, it is convenient to mount more storage assemblies 1 and fire prevention assemblies 2 per unit volume of space, and to store a large number of battery cells 10 in the energy storage system.

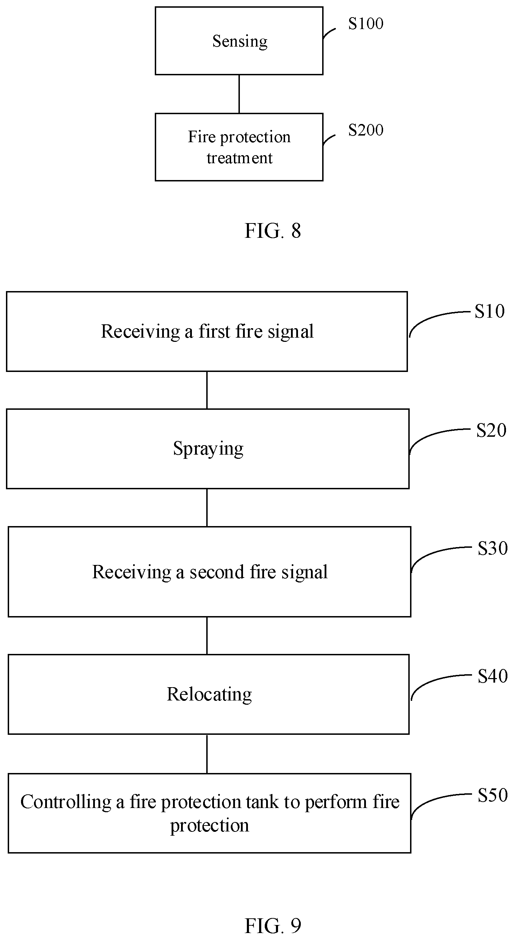

FIG. 8 is a schematic flowchart of a fire protection method according to an embodiment of this application; In some optional embodiments, optionally, as shown in FIG. 8, An embodiment of this application provides a fire protection method for an energy storage system, including the following steps:
S100. Performing sensing: A thermometric optical fiber 22 senses a temperature of a battery cell 10 stored in a storage assembly 1, so as to send a fire signal when the temperature of the battery cell 10 reaches a threshold; and
S200. Performing fire protection treatment: Performing fire protection on the battery cell 10 in the storage assembly 1 upon receiving the fire signal.

The thermometric optical fiber 22 is mounted on a plate 21. The plate 21 is disposed opposite to the storage assembly 1.

FIG. 9 is a schematic flowchart of a fire protection method according to another embodiment of this application; and In some optional embodiments, optionally, as shown in FIG. 9, In step S200, the fire signal is received by a control assembly 6, and the step of performing, by the control assembly 6, fire protection on the battery cell 10 in the storage assembly 1 upon receiving the fire signal includes:
S10. Receiving a first fire signal;
S20. Spraying: Controlling a sprinkler head 31 of a fire protection assembly 3 to spray;
S30. Receiving a second fire signal;
S40. Relocating: Controlling a stacking apparatus 4 to relocate the corresponding storage assembly 1 to a fire protection tank 32 of the fire protection assembly 3; and
S50. Controlling the fire protection tank 32 to perform fire protection.

The first fire signal is a signal sent by the thermometric optical fiber 22 upon detecting that the temperature inside the battery cell 10 reaches the threshold. The second fire signal is a signal received after the spraying as an instruction for the fire protection tank 32 to perform fire protection. For example, after the spraying, the thermometric optical fiber 22 detects that the temperature of the battery cell 10 drops to the threshold or that the spray time reaches a time threshold.

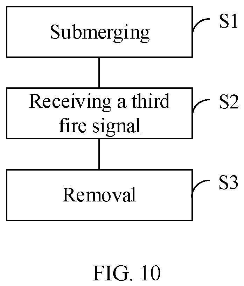

FIG. 10 is a schematic flowchart of a fire protection method according to still another embodiment of this application. In some optional embodiments, optionally, as shown in FIG. 10, The step S40 "controlling the fire protection tank 32 to perform fire protection" includes:
S1. Submerging: Controlling a moving assembly 322 to submerge the storage assembly 1 in a tank body 321;
S2. Receiving a third fire signal; and
S3. Removal: Controlling the moving assembly 322 to remove the storage assembly 1 out of the tank body 321.

The third fire signal is a temperature signal sent by a temperature sensor 323 in the tank body 321 or a received fire protection operation stoppage signal. For example, the third fire signal indicates that the temperature measured by the temperature sensor 323 is lower than a threshold or the submerging time reaches a time threshold.

In contrast to the prior art, in the energy storage system in an embodiment of this application, first, the fire prevention assembly 2 and the storage assembly 1 are disposed correspondingly to facilitate accurate detection of a fire point and accurate positioning of the fire start point. Second, the thermometric optical fiber 22 makes the storage system more sensitively responsive to the fire, enables the fire protection measures to be taken quickly, and makes the fire be dealt with in time. Third, with the thermometric optical fiber 22 disposed in a curved manner, a larger part of the thermostatic optical fiber 22 is caused to be oriented toward the storage assembly 1, thereby accelerating the temperature measurement progress and the response speed.

Although this application has been described with reference to exemplary embodiments, various improvements may be made to the embodiments without departing from the scope of this application.

This application is not limited to the specific embodiments disclosed

## Claims

1. An energy storage system, comprising:
a storage assembly (1), configured to store a battery cell (10); and
a fire prevention assembly (2), comprising a plate (21) and a thermometric optical fiber (22) disposed on the plate (21), wherein the plate (21) is disposed opposite to the storage assembly (1), and the thermometric optical fiber (22) is configured to sense a temperature of the battery cell (10) so as to send a fire signal when the temperature of the battery cell (10) reaches a threshold, wherein
the thermometric optical fiber (22) is disposed on a side of the plate (21) and extends along a curved path, the side being oriented toward the storage assembly (1);
wherein the energy storage system further comprises a fire protection assembly (3), the fire protection assembly (3) comprises a sprinkler head (31), and the sprinkler head (31) is disposed corresponding to the storage assembly (1) and configured to spray a fire-extinguishing liquid to the battery cell (10) when the temperature of the battery cell (10) reaches the threshold;
wherein the fire protection assembly (3) further comprises a fire protection tank (32), and the fire protection tank (32) is configured to accommodate the fire-extinguishing liquid and receive the storage assembly (1) that contains an abnormal-temperature battery cell, so as to submerge the battery cell (10) in the fire-extinguishing liquid;
wherein the fire protection tank (32) comprises a tank body (321) and a moving assembly (322), the tank body (321) is configured to accommodate the fire-extinguishing liquid, the moving assembly (322) is connected to the tank body (321) and movable along an extension direction of the tank body (321), and the moving assembly (322) is configured to move the storage assembly (1) containing the abnormal-temperature battery cell (10) into the tank body (321) and submerge the storage assembly in the fire-extinguishing liquid;
wherein the moving assembly (322) includes a hydraulic moving lever (3221) and a bench (3222), the bench (3222) is configured to accommodate the storage assembly (1) containing the abnormal-temperature battery cell (10), the hydraulic moving lever (3221) is connected to the bench (3222), and the hydraulic moving lever (3221) is configured to drive the bench (3222) to move into the tank body (321);
wherein a beam detector is disposed at a start position of a reciprocating movement of the bench (3222), the storage assembly (1) to be protected against fire passes through the beam detector when being placed into the bench (3222), and the beam detector is configured to facilitate wake-up of the fire protection tank (32) and restore the fire protection tank (32) from a standby state to a working state.

2. The energy storage system according to claim 1, wherein a plurality of fixing pieces (23) are disposed on the side of the plate (21), the side being oriented toward the storage assembly (1); and the plurality of fixing pieces (23) are configured to provide a support for the curved extending of the thermometric optical fiber (22) on the plate (21).

3. The energy storage system according to claim 2, wherein a plurality of the thermometric optical fibers (21) are disposed on the plate (21).

4. The energy storage system according to any one of claims 1 to 3, wherein a temperature sensor (323) is disposed in the tank body (321) and configured to detect a temperature of the fire-extinguishing liquid.

5. The energy storage system according to claim 4, wherein the energy storage system further comprises a stacking apparatus (4), and the stacking apparatus (4) is movable relative to the energy storage assembly (1) and configured to pick up the energy storage assembly (1) and place the energy storage assembly into the moving assembly (322).

6. The energy storage system according to claim 5, wherein the energy storage system further comprises a control assembly; the control assembly is electrically connected to the fire prevention assembly (2), the fire protection assembly (3), and stacking apparatus (4) and configured to receive the fire signal transmitted by the fire prevention assembly (2), control the corresponding sprinkler head (31) to turn on or off, control the moving assembly (322) to move or stop, and control the stacking apparatus (4) to pick up the corresponding energy storage assembly (1) and place the energy storage assembly into the moving assembly (322).

7. The energy storage system according to any one of claims 1 to 6, wherein the storage assembly (1) comprises a pallet (11) and a plurality of partition plates (12), the plurality of partition plates (12) are disposed on the pallet (11) to form a plurality of accommodation chambers (13), and the accommodation chambers (13) are configured to accommodate the battery cell (10).

8. The energy storage system according to any one of claims 1 to 7, wherein the energy storage system further comprises a shelf (5), a plurality of storage assemblies (1) and a plurality of fire prevention assemblies (2) are accommodated in the shelf (5), and the plurality of storage assemblies (1) are disposed corresponding to the plurality of fire prevention assemblies (2).

9. A fire protection method for an energy storage system according to any one of claims 1 to 8, comprising:
sensing, by a thermometric optical fiber (22), a temperature of a battery cell (10) stored in a storage assembly (1), so as to send a fire signal when the temperature of the battery cell (10) reaches a threshold; and
performing fire protection on the battery cell (10) in the storage assembly (1) upon receiving the fire signal, wherein
the thermometric optical fiber (22) is mounted on a plate (21), and the plate (21) is disposed opposite to the storage assembly (1).

10. The fire protection method according to claim 9, wherein the fire signal is received by a control assembly, and the step of performing, by the control assembly, fire protection on the battery cell (10) in the storage assembly (1) upon receiving the fire signal comprises:
receiving a first fire signal;
controlling a sprinkler head of a fire protection assembly (3) to spray;
receiving a second fire signal;
controlling a stacking apparatus (4) to relocate the corresponding storage assembly (1) to a fire protection tank (32) of the fire protection assembly (3); and
controlling the fire protection tank (32) to perform fire protection, wherein
the first fire signal is a signal sent by the thermometric optical fiber (22) upon detecting that the temperature inside the battery cell (10) reaches the threshold, and the second fire signal is a signal received after the spraying as an instruction for the fire protection tank (32) to perform fire protection.

11. The fire protection method according to claim 10, wherein the step of controlling the fire protection tank (32) to perform fire protection comprises:
controlling a moving assembly (322) to submerge the storage assembly (1) in a tank body (321);
receiving a third fire signal; and
controlling the moving assembly (322) to remove the storage assembly (1) out of the tank body (321), wherein
the third fire signal is a temperature signal sent by a temperature sensor in the tank body (321) or a received fire protection operation stoppage signal.

## Patentansprüche

1. Energiespeichersystem, aufweisend:
eine Aufbewahrungsbaugruppe (1), die dazu eingerichtet ist, eine Batteriezelle (10) aufzubewahren; und
eine Feuerverhütungsbaugruppe (2), die eine Platte (21) und eine auf der Platte (21) angeordnete thermometrische optische Faser (22) aufweist, wobei die Platte (21) gegenüber der Aufbewahrungsbaugruppe (1) angeordnet ist und die thermometrische optische Faser (22) dazu eingerichtet ist, eine Temperatur der Batteriezelle (10) zu erfassen, um ein Feuersignal zu senden, wenn die Temperatur der Batteriezelle (10) einen Schwellenwert erreicht, wobei
die thermometrische optische Faser (22) auf einer Seite der Platte (21) angeordnet ist und entlang eines gekrümmten Pfades verläuft und die Seite in Richtung der Aufbewahrungsbaugruppe (1) ausgerichtet ist;
wobei das Energiespeichersystem ferner eine Feuerschutzbaugruppe (3) aufweist, die Feuerschutzbaugruppe (3) einen Sprinklerkopf (31) aufweist und der Sprinklerkopf (31) der Aufbewahrungsbaugruppe (1) entsprechend angeordnet ist und dazu eingerichtet ist, eine Feuerlöschflüssigkeit auf die Batteriezelle (10) zu sprühen, wenn die Temperatur der Batteriezelle (10) den Schwellenwert erreicht;
wobei die Feuerschutzbaugruppe (3) ferner einen Feuerschutztank (32) aufweist und der Feuerschutztank (32) dazu eingerichtet ist, die Feuerlöschflüssigkeit aufzunehmen und die Aufbewahrungsbaugruppe (1), die eine Batteriezelle mit abnormaler Temperatur enthält, zu empfangen, um die Batteriezelle (10) in der Feuerlöschflüssigkeit unterzutauchen;
wobei der Feuerschutztank (32) einen Tankkörper (321) und eine Bewegungsbaugruppe (322) aufweist, der Tankkörper (321) dazu eingerichtet ist, die Feuerlöschflüssigkeit aufzunehmen, die Bewegungsbaugruppe (322) mit dem Tankkörper (321) verbunden ist und entlang einer Erstreckungsrichtung des Tankkörpers (321) bewegbar ist und die Bewegungsbaugruppe (322) dazu eingerichtet ist, die Aufbewahrungsbaugruppe (1), die die Batteriezelle mit abnormaler Temperatur enthält, in den Tankkörper (321) zu bewegen und die Aufbewahrungsbaugruppe in der Feuerlöschflüssigkeit unterzutauchen;
wobei die Bewegungsbaugruppe (322) einen hydraulischen Bewegungshebel (3221) und eine Bank (3222) aufweist, die Bank (3222) dazu eingerichtet ist, die Aufbewahrungsbaugruppe (1) aufzunehmen, die die Batteriezelle mit abnormaler Temperatur enthält, der hydraulische Bewegungshebel (3221) mit der Bank (3222) verbunden ist und der hydraulische Bewegungshebel (3221) dazu eingerichtet ist, die Bank (3222) dazu anzutreiben, sich in den Tankkörper (321) zu bewegen;
wobei ein Strahlendetektor an einer Anfangsposition einer Hin- und Herbewegung der Bank (3222) angeordnet ist, die gegen Feuer zu schützende Aufbewahrungsbaugruppe (1) den Strahlendetektor durchläuft, wenn sie in die Bank (3222) platziert wird, und der Strahlendetektor dazu eingerichtet ist, die Aktivierung des Feuerschutztanks (32) zu erleichtern und den Feuerschutztank (32) von einem Bereitschaftszustand in einen Arbeitszustand zu versetzen.

2. Energiespeichersystem nach Anspruch 1, wobei mehrere Befestigungsstücke (23) an der Seite der Platte (21) angeordnet sind und die Seite in Richtung der Aufbewahrungsbaugruppe (1) ausgerichtet ist; und die mehreren Befestigungsstücke (23) dazu eingerichtet sind, den gekrümmten Verlauf der thermometrischen optischen Faser (22) auf der Platte (21) zu stützen.

3. Energiespeichersystem nach Anspruch 2, wobei mehrere der thermometrischen optischen Fasern (21) auf der Platte (21) angeordnet sind.

4. Energiespeichersystem nach einem der Ansprüche 1 bis 3, wobei ein Temperatursensor (323) in dem Tankkörper (321) angeordnet ist und dazu eingerichtet ist, eine Temperatur der Feuerlöschflüssigkeit zu erfassen.

5. Energiespeichersystem nach Anspruch 4, wobei das Energiespeichersystem ferner eine Stapelvorrichtung (4) aufweist und die Stapelvorrichtung (4) relativ zu der Energie-Aufbewahrungsbaugruppe (1) bewegbar ist und dazu eingerichtet ist, die Energie-Aufbewahrungsbaugruppe (1) aufzuheben und die Energie-Aufbewahrungsbaugruppe in die Bewegungsbaugruppe (322) zu platzieren.

6. Energiespeichersystem nach Anspruch 5, wobei das Energiespeichersystem ferner eine Steuerungsbaugruppe aufweist; die Steuerungsbaugruppe elektrisch mit der Feuerverhütungsbaugruppe (2), der Feuerschutzbaugruppe (3) und der Stapelvorrichtung (4) verbunden ist und dazu eingerichtet ist, das von der Feuerverhütungsbaugruppe (2) übertragene Feuersignal zu empfangen, den entsprechenden Sprinklerkopf (31) dazu zu steuern, sich ein- oder auszuschalten, die Bewegungsbaugruppe (322) dazu zu steuern, sich zu bewegen oder anzuhalten, und die Stapelvorrichtung (4) dazu zu steuern, die entsprechende Energie-Aufbewahrungsbaugruppe (1) anzuheben und die Energie-Aufbewahrungsbaugruppe in die Bewegungsbaugruppe (322) zu platzieren.

7. Energiespeichersystem nach einem der Ansprüche 1 bis 6, wobei die Aufbewahrungsbaugruppe (1) eine Palette (11) und mehrere Trennplatten (12) aufweist, die mehreren Trennplatten (12) auf der Palette (11) angeordnet sind, um mehrere Aufnahmekammern (13) zu bilden, und die Aufnahmekammern (13) dazu eingerichtet sind, die Batteriezelle (10) aufzunehmen.

8. Energiespeichersystem nach einem der Ansprüche 1 bis 7, wobei das Energiespeichersystem ferner ein Regal (5) aufweist, mehrere Aufbewahrungsbaugruppen (1) und mehrere Feuerverhütungsbaugruppen (2) in das Regal (5) aufgenommen sind und die mehreren Aufbewahrungsbaugruppen (1) den mehreren Feuerverhütungsbaugruppen (2) entsprechend angeordnet sind.

9. Feuerschutzverfahren für ein Energiespeichersystem nach einem der Ansprüche 1 bis 8, umfassend:
Erfassen, durch eine thermometrische optische Faser (22), einer Temperatur einer in einer Aufbewahrungsbaugruppe (1) aufbewahrten Batteriezelle (10), um ein Feuersignal zu senden, wenn die Temperatur der Batteriezelle (10) einen Schwellenwert erreicht; und
Durchführen von Feuerschutz an der Batteriezelle (10) in der Aufbewahrungsbaugruppe (1) bei Empfang des Feuersignals, wobei
die thermometrische optische Faser (22) auf einer Platte (21) montiert ist und die Platte (21) gegenüber der Aufbewahrungsbaugruppe (1) angeordnet ist.

10. Feuerschutzverfahren nach Anspruch 9, wobei das Feuersignal von einer Steuerungsbaugruppe empfangen wird und der Schritt des Durchführens, durch die Steuerungsbaugruppe, des Feuerschutzes an der Batteriezelle (10) in der Aufbewahrungsbaugruppe (1) bei Empfang des Feuersignals umfasst:
Empfangen eines ersten Feuersignals;
Steuern eines Sprinklerkopfes einer Feuerschutzbaugruppe (3) dazu, zu sprühen;
Empfangen eines zweiten Feuersignals;
Steuern einer Stapelvorrichtung (4) dazu, die entsprechende Aufbewahrungsbaugruppe (1) zu einem Feuerschutztank (32) der Feuerschutzbaugruppe (3) umzusetzen; und
Steuern des Feuerschutztanks (32) dazu, einen Feuerschutz durchzuführen, wobei
das erste Feuersignal ein Signal ist, das von der thermometrischen optischen Faser (22) bei Erfassung, dass die Temperatur innerhalb der Batteriezelle (10) den Schwellenwert erreicht, gesendet wird und das zweite Feuersignal ein Signal ist, das nach dem Sprühen als Anweisung an den Feuerschutztank (32), den Feuerschutz durchzuführen, empfangen wird.

11. Feuerschutzverfahren nach Anspruch 10, wobei der Schritt des Steuerns des Feuerschutztanks (32) dazu, den Feuerschutz durchzuführen, umfasst:
Steuern einer Bewegungsbaugruppe (322) dazu, die Aufbewahrungsbaugruppe (1) in einem Tankkörper (321) unterzutauchen;
Empfangen eines dritten Feuersignals; und
Steuern der Bewegungsbaugruppe (322) dazu, die Aufbewahrungsbaugruppe (1) aus dem Tankkörper (321) zu entfernen, wobei
das dritte Feuersignal ein Temperatursignal, das von einem Temperatursensor in dem Tankkörper (321) gesendet wird, oder ein empfangenes Feuerschutzbetrieb-Stoppsignal ist.

## Revendications

1. Système de stockage d'énergie, comprenant:
un ensemble de stockage (1), configuré pour stocker une cellule de batterie (10); et
un ensemble de prévention d'incendie (2), comprenant une plaque (21) et une fibre optique thermométrique (22) disposées sur la plaque (21), dans lequel la plaque (21) est disposée à l'opposé de l'ensemble de stockage (1), et la fibre optique thermométrique (22) est configurée pour détecter une température de la cellule de batterie (10) de manière à envoyer un signal d'incendie lorsque la température de la cellule de batterie (10) atteint un seuil, dans lequel
la fibre optique thermométrique (22) est disposée sur un côté de la plaque (21) et s'étend le long d'un trajet courbe, le côté étant orienté vers l'ensemble de stockage (1);
dans lequel le système de stockage d'énergie comprend en outre un ensemble de protection contre l'incendie, l'ensemble de protection contre l'incendie (3) comprend une tête d'arrosage (31), et la tête d'arrosage (31) est disposée de manière à correspondre à l'ensemble de stockage (1) et configurée pour pulvériser un liquide d'extinction d'incendie sur la cellule de batterie (10) lorsque la température de la cellule de batterie (10) atteint le seuil;
dans lequel l'ensemble de protection contre l'incendie (3) comprend en outre un réservoir de protection contre l'incendie (32), et le réservoir de protection contre l'incendie (32) est configuré pour accueillir le liquide d'extinction d'incendie et recevoir l'ensemble de stockage (1) qui contient une cellule de batterie à température anormale, de manière à immerger la cellule de batterie (10) dans le liquide d'extinction d'incendie;
dans lequel le réservoir de protection contre l'incendie (32) comprend un corps de réservoir (321) et un ensemble mobile (322), le corps de réservoir (321) est configuré pour accueillir le liquide d'extinction d'incendie, l'ensemble mobile (322) est relié au corps de réservoir (321) et mobile le long d'une direction d'extension du corps de réservoir (321), et l'ensemble mobile (322) est configuré pour déplacer l'ensemble de stockage (1) contenant la cellule de batterie à température anormale (10) dans le corps de réservoir (321) et immerger l'ensemble de stockage dans le liquide d'extinction d'incendie;
dans lequel l'ensemble mobile (322) comprend un levier de déplacement hydraulique (3221) et un siège (3222), le siège (3222) est configuré pour accueillir l'ensemble de stockage (1) contenant la cellule de batterie à température anormale (10), le levier de déplacement hydraulique (3221) est relié au siège (3222) et le levier de déplacement hydraulique (3221) est configuré pour entraîner le siège (3222) à se déplacer dans le corps de réservoir (321);
dans lequel un détecteur de faisceau est disposé au niveau d'une position de départ d'un mouvement alternatif du siège (3222), l'ensemble de stockage (1) à protéger contre l'incendie passe à travers le détecteur de faisceau lorsqu'il est placé dans le siège (3222), et le détecteur de faisceau est configuré pour faciliter le réveil du réservoir de protection contre l'incendie (32) et rétablir le réservoir de protection contre l'incendie (32) d'un état de veille à un état de fonctionnement.

2. Système de stockage d'énergie selon la revendication 1, dans lequel une pluralité de pièces de fixation (23) sont disposées sur le côté de la plaque (21), le côté étant orienté vers l'ensemble de stockage (1); et la pluralité de pièces de fixation (23) sont configurées pour fournir un support pour l'extension courbe de la fibre optique thermométrique (22) sur la plaque (21).

3. Système de stockage d'énergie selon la revendication 2, dans lequel une pluralité de fibres optiques thermométriques (21) sont disposées sur la plaque (21).

4. Système de stockage d'énergie selon l'une quelconque des revendications 1 à 3, dans lequel un capteur de température (323) est disposé dans le corps de réservoir (321) et configuré pour détecter une température du liquide d'extinction d'incendie.

5. Système de stockage d'énergie selon la revendication 4, dans lequel le système de stockage d'énergie comprend en outre un appareil d'empilage (4), et l'appareil d'empilage (4) est mobile par rapport à l'ensemble de stockage d'énergie (1) et configuré pour saisir l'ensemble de stockage d'énergie (1) et placer l'ensemble de stockage d'énergie dans l'ensemble mobile (322).

6. Système de stockage d'énergie selon la revendication 5, dans lequel le système de stockage d'énergie comprend en outre un ensemble de commande; l'ensemble de commande est connecté électriquement à l'ensemble de prévention d'incendie (2), l'ensemble de protection contre l'incendie (3), et l'appareil d'empilage (4) et configuré pour recevoir le signal d'incendie transmis par l'ensemble de prévention d'incendie (2), commander la tête d'arrosage correspondante (31) pour s'allumer ou s'éteindre, commander l'ensemble mobile (322) pour se déplacer ou s'arrêter, et commander l'appareil d'empilage pour saisir l'ensemble de stockage d'énergie correspondant (1) et placer l'ensemble de stockage d'énergie dans l'ensemble mobile (322).

7. Système de stockage d'énergie selon l'une quelconque des revendications 1 à 6, dans lequel l'ensemble de stockage (1) comprend une palette (11) et une pluralité de plaques de séparation (12), la pluralité de plaques de séparation (12) sont disposées sur la palette (11) pour former une pluralité de chambres d'accueil (13), et les chambres d'accueil (13) sont configurées pour accueillir la cellule de batterie (10).

8. Système de stockage d'énergie selon l'une quelconque des revendications 1 à 7, dans lequel le système de stockage d'énergie comprend en outre une étagère (5), une pluralité d'ensembles de stockage (1) et une pluralité d'ensembles de prévention d'incendie (2) sont d'accueillis dans l'étagère (5), et la pluralité d'ensembles de stockage (1) sont disposés en correspondance avec la pluralité d'ensembles de prévention d'incendie (2).

9. Procédé de protection contre l'incendie pour un système de stockage d'énergie selon l'une quelconque des revendications 1 à 8, comprenant:
la détection, au moyen d'une fibre optique thermométrique (22), de la température d'une cellule de batterie (10) stockée dans un ensemble de stockage (1), de manière à envoyer un signal d'incendie lorsque la température de la cellule de batterie (10) atteint un seuil; et
la réalisation d'une protection contre l'incendie sur la cellule de batterie (10) dans l'ensemble de stockage (1) à la réception du signal d'incendie, dans lequel
la fibre optique thermométrique (22) est montée sur une plaque (21), et la plaque (21) est disposée à l'opposé de l'ensemble de stockage (1).

10. Procédé de protection contre l'incendie selon la revendication 9, dans lequel le signal d'incendie est reçu par un ensemble de commande, et l'étape consistant à effectuer, au moyen de l'ensemble de commande, de la protection contre l'incendie sur la cellule de batterie (10) dans l'ensemble de stockage (1) à la réception du signal d'incendie comprend:
la réception d'un premier signal d'incendie;
la commande à une tête d'arrosage d'un ensemble de protection contre l'incendie (3) pour pulvériser;
la réception d'un deuxième signal d'incendie;
la commande à un appareil d'empilage (4) pour déplacer l'ensemble de stockage correspondant (1) vers un réservoir de protection contre l'incendie (32) de l'ensemble de protection contre l'incendie (3); et
la commande au réservoir de protection contre l'incendie (32) pour effectuer la protection contre l'incendie, dans lequel
le premier signal d'incendie est un signal envoyé par la fibre optique thermométrique (22) après avoir détecté que la température à l'intérieur de la cellule de batterie (10) atteint le seuil, et le deuxième signal d'incendie est un signal reçu après la pulvérisation en tant qu'instruction pour que le réservoir de protection contre l'incendie (32) effectue la protection contre l'incendie.

11. Procédé de protection contre l'incendie selon la revendication 10, dans lequel l'étape de commande du réservoir de protection contre l'incendie (32) pour effectuer la protection contre l'incendie comprend:
la commande à un ensemble mobile (322) pour immerger l'ensemble de stockage (1) dans un corps de réservoir (321);
la réception d'un troisième signal d'incendie; et
la commande à l'ensemble mobile (322) pour retirer l'ensemble de stockage (1) du corps du réservoir (321), dans lequel
le troisième signal d'incendie est un signal de température envoyé par un capteur de température situé dans le corps de réservoir (321) ou un signal d'arrêt d'opération de protection contre l'incendie reçu.
